(19) Europäisches Patentamt
European Patent Office
Office européen des brevets

(11) Publication number: **0 489 552 A2**

(12) **EUROPEAN PATENT APPLICATION**

(21) Application number: **91311104.3**

(51) Int. Cl.[5]: **G06F 15/62**

(22) Date of filing: **29.11.91**

(30) Priority: **03.12.90 GB 9026232**

(43) Date of publication of application: **10.06.92 Bulletin 92/24**

(84) Designated Contracting States: **DE FR GB IT NL**



(71) Applicant: **I.G.E. MEDICAL SYSTEMS LIMITED Colney Street St. Albans, Hertforshire AL2 2ER (US)**

(72) Inventor: **Tindall, Robert John 31 Furze View Chorleywood, Hertfordshire WD3 5HT (GB)**

(74) Representative: **Pratt, Richard Wilson London Patent Operation G.E. TECHNICAL SERVICES CO. INC. Burdett House 15/16 Buckingham Street London WC2N 6DU (GB)**


(54) **Image processing system.**


(57) Image data in integer format is converted to floating point format by an input converter (271). A microprocessor (272) is arranged to operate substantially only on the floating point image data, and under software control performs pipelined floating point arithmetic operations in parallel, and in parallel with associated core instructions. An output converter (273) uses hardware to convert the floating point data to integer format and to perform other operations such as clipping and applying a transfer function to the data.

FROM IMAGE MEMORY
INPUT CONVERTER
271
μP
272
OUTPUT CONVERTER
273
TO DISPLAY STORE
FIG.3.



EP 0 489 552 A2

Jouve, 18, rue Saint-Denis, 75001 PARIS

The present invention relates to an image processing system. An illustrative embodiment of the invention relates to a medical diagnostic imaging system. The invention will be discussed herein by way of example in relation to a medical diagnostic imaging system especially a nuclear imaging system but is not limited in application to such a system.

In e.g. a nuclear imaging system a radioactive substance emitting gamma radiation is injected into a subject to be imaged. The gamma radiation is sensed by a scintillation crystal combined with photomultiplier tubes, and the scintillation events are converted into electrical signals which are digitized to produce image signals which are processed to produce the image.

The sorts of image which it is desirable to produce in nuclear and other medical imaging systems require high speed real-time processing. For example one sort of image is a "cine" or moving image of the subject. The image signals are processed by special purpose high speed computing apparatus. One example of such apparatus is described in US-A-4497024.

General purpose image processing circuits, such as the Intel i860 (Trade Mark) 64-bit microprocessor, are now available for fast image processing, but it has been found that they are not inherently fast enough in operation to satisfy the requirements of medical image processors.

The present invention seeks to enhance the rate of operation of an image processing circuit.

According to one aspect of the present invention, there is provided an image processing apparatus comprising processing means arranged to perform a plurality of pipelined arithmetic operations in parallel on image data represented in floating point format and converting means arranged to receive the processed floating point data from the processing means and to convert the processed floating point data to a form suitable for use by an image data utilization means.

In an embodiment of the invention, the processing means e.g. the Intel i860 microprocessor performs floating point pipelined arithmetic operations in parallel, core instructions associated with those operations being performed in parallel therewith. The arithmetic operations comprise scaling (i.e. multiplying by a scaling factor) and offsetting (i.e. adding a fixed offset factor), followed , if needed, by interpolation. All the floating point and core operations are controlled by software.

Other image data processing operations are carried out by hardware in the converting means. In the embodiment the other operations include conversion of the floating point data to integer form, together with clipping: i.e. limiting the dynamic range of the data. The conversion may be according to a linear or non-linear transfer function.

In the embodiment these other processing operations are carried out to make the image data compatible with a display device for displaying the image.

Performing core instructions in parallel with floating point instructions is termed "dual mode" operation. Performing floating point arithmetic operations in parallel is termed "dual operation". By restricting the microprocessor functions as far as possible to software controlled dual mode, dual operation, pipelined parallel floating point arithmetic and performing other functions in hardware, the throughput of the image processing apparatus becomes sufficient for e.g. the medical imaging purposes discussed hereinbefore. Restricting the arithmetic operations to the parallel floating point multiply and add operations associated with the scaling and offsetting without any clipping has the consequence that the dynamic range of the numbers produced becomes very large, i.e. the dynamic range of the input data multiplied by the scaling factor. Use of floating point representation allows such a large dynamic range subject only to the inherent limits of the floating point format used. Although the dynamic range becomes large, the numbers are produced at a rate of one per clock cycle once the pipelines are full.

Performing clipping after interpolation is advantageous because it has been found that some interpolation algorithms "ring" in response to clipped data. In addition some interpolation algorithms may increase the dynamic range. Performing clipping by hardware at the output of the microprocessor relieves the microprocessor of a task which would significantly reduce its throughput.

The nuclear imaging system mentioned hereinbefore produces digital image signals in integer form. In an embodiment of the present invention, an input converter is provided to convert the integer format signals to floating point format for processing by the processing means. The input converter may be a ROM or RAM containing a look-up table. This assists in increasing the throughput of the processing means, because the processing means is not required to perform the conversion itself.

For a better understanding of the present invention, reference will now be made, by way of example, to the accompanying drawings, in which

Figure 1 is a schematic view of an Anger camera;

Figure 2 is a block diagram of a medical diagnostic imaging system,

Figure 3 is a block diagram of an image processing circuit according to an embodiment of the invention,

Figure 4 is a block diagram of an embodiment of the output converter of Figure 3,

Figure 5 is a graph illustrating a linear transfer function,

Figure 6 is a block diagram of part of the processor shown in Figure 3,

Figure 7 is a block diagram of part of Figure 6.

Figure 8 is a schematic diagram of a 3-stage pipeline.

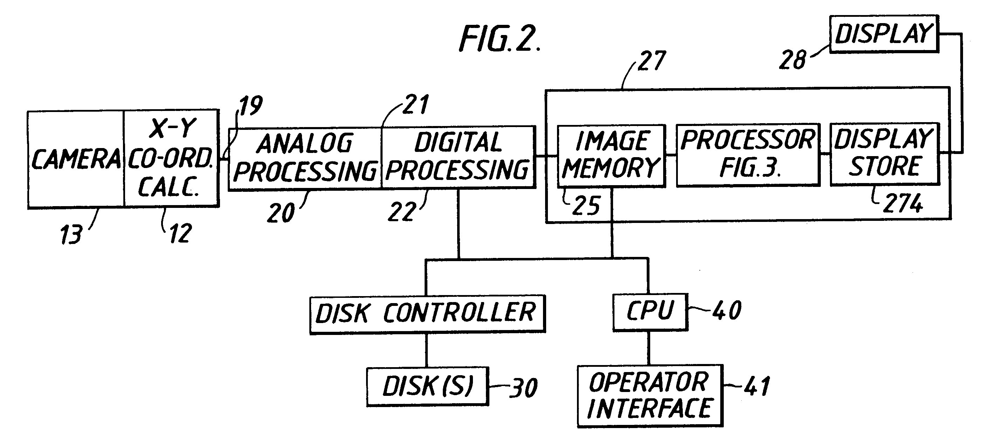

Reference will also be made herein by way of example to Appendix 1 which is a listing of some of the program steps carried out by the processor of Figure 2 and to Appendix 2 which is a listing of program steps which load data used by the steps of Appendix 1.

## OVERVIEW OF THE SYSTEM

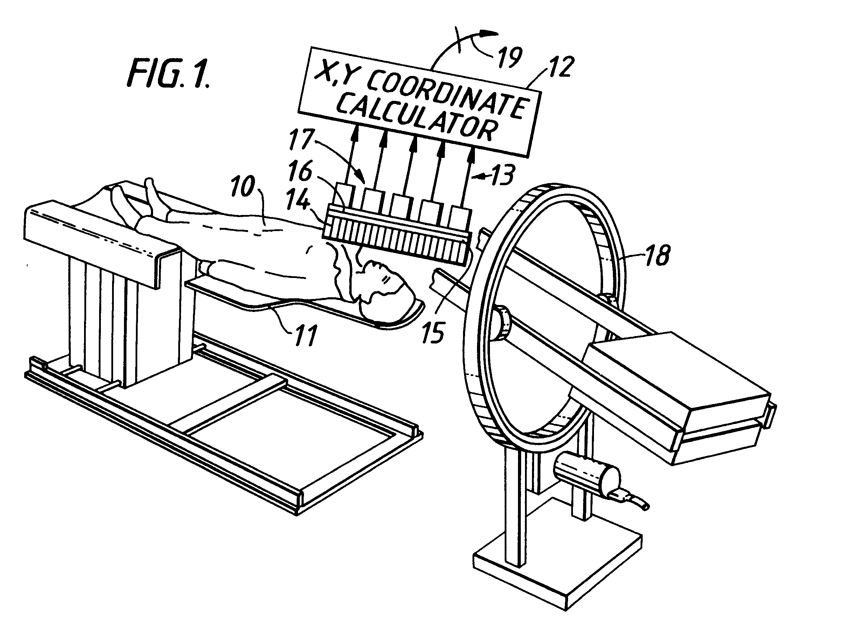

In Fig. 1, a body 10 in which an isotope may have been infused is supported on a table top 11. As is well known, the various isotopes used in nuclear medicine emit gamma ray photons in a pattern which permits visualizing the configuration of bones and organs, for example. An "Anger" camera (also known as a nuclear or gamma camera) 13 is used to detect and identify the coordinates of the gamma ray photon emissions. The camera is supported by a gantry 18 as is conventional. The camera comprises a lead plate 14 that has a myriad of fine holes so the plate acts as a collimator. Interfaced with the collimator is a scintillation crystal 15 which produces scintillations wherever photons are absorbed by it. The scintillations are coupled by means of a glass plate 16 and optical couplant to an array of photomultiplier tubes which are collectively designated by the numeral 17. The photomultiplier tubes are usually packed closely with each other within a circle, or rectangle as is well known. At any one moment in time only one scintillation event is detected. Any detected scintillation event causes the photomultiplier tubes 17 to produce analog signals which are sent to an X-Y co-ordinate calculator 12 shown here as part of the camera. The calculator 12 uses the signals to compute signals indicative of the X and Y coordinates of each scintillation event and a signal E, commonly called an energy signal, which is indicative of whether the energy of a detected scintillation event was high enough or of the correct isotope to be considered valid. The indicative signals express the coordinates of each scintillation event in terms of analog signal magnitudes. Calculating the X and Y co-ordinates in terms of analog signals is well known. One scheme for determining the X and Y co-ordinates of each scintillation is described in U.S. Pat. No. 4,142,102. The analog X and Y co-ordinate signals and the energy signal E are transmitted from the camera by way of lines 19 to an analog processor 20 shown in Figure 2.

The analogue processor 20 is part of a data acquisition module 21. The processor 20, in known manner, applies spatial and energy corrections to the signals generated by the camera 13 in response to each scintillation event to compensate for non-linearities in the characteristics of the Anger camera. Thus only events falling within a defined area covered by the tubes 17 and falling within a defined energy band or window are accepted. Several energy windows may operate simultaneously. The analogue processor passes its output to a digital processor 22 via an analogue to digital converter (not shown). The digital processor 22 produces a series of digital numbers which represent X and Y co-ordinates or the addresses of the scintillations. Each scintillation falls within the boundaries of one of the pixels which define the image frame. The digital coordinate values are used as addresses to locations in a random access memory (RAM) 25 which is the image memory of an image processor 27.

The data acquisition module 21 operates in known manner so that scintillation events from the body 10 are observed for e.g. a period of time chosen by the operator of the camera, and so that at the end of the chosen period of time the contents of each addressed location in the RAM 25 is a number representing the number of events observed at the X-Y location corresponding to that address over the chosen period of time. Instead of, or in addition to, a period of time other criteria termed termination criteria may be used such as total number of events.

For simplicity it is assumed that the addressed locations in the RAM 25 correspond directly with the X-Y locations of the scintillation events. In practice, as is known, the correspondence may be indirect.

The numbers in the locations may be in any binary format, typically 8 bit unsigned data or 16 bit 2's complement data in integer format. The image processor 27 amongst other functions takes the digital data from the RAM 25, processes it, and feeds it to a display store 274 for display by an image display 28.

Data to be displayed may also be derived from e.g. a hard disk store 30 (or other known storage device). Such data is retrieved from the store 30 and put into the RAM 25.

The retrieval of data, and indeed, the operation of the system is controlled by a CPU 40 which in turn responds to the instructions of an operator who communicates with the CPU 40 by means of a known interface 41 such as a keyboard and monitor.

One of the display parameters which the operator can control is "window levelling" by which the operator controls the lower and upper input data values corresponding to the dynamic range of the display. Another parameter is the interpolation of the image by e.g. fixed factors such as x2, x4 and x8.

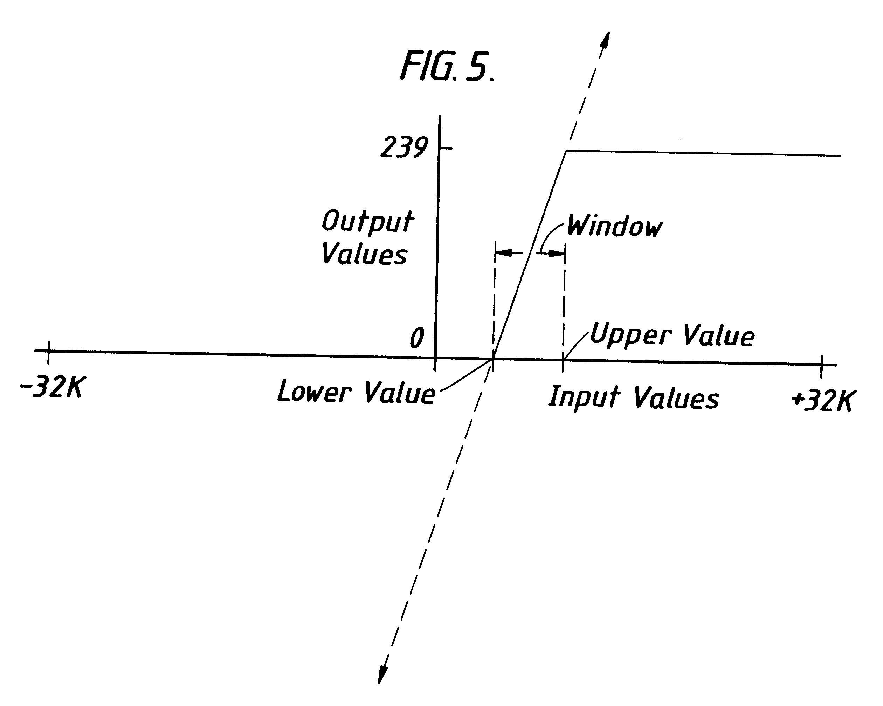

The illustrative embodiment of the invention shown in the figures implements, amongst other functions, a transfer function between input data (i.e. data held in the image memory 25) and output data (i.e. data held in the display store 274) one version of which is shown in Figure 5.

Referring to Figure 5, 16 bit 2's complement input data has a range of -32768 to +32767. It is desired to display that part of the input data ranging between a lower value and an upper value which may be any two values between -32768 and +32767 and which are chosen by the operator. The display store and/or the display has a dynamic range of 239 in the example shown in Figure 5.

The CPU 40 calculates from the chosen upper and lower values, and from the known dynamic range of the display, scale and offset values where

$$\text{scale} = \frac{\text{dynamic range of display}}{\text{upper} - \text{lower}}$$

offset = base x scale where base is lower value

It will be appreciated that applying the resulting 'window levelling' relationship

output = (Input x scale) -offset

to the entire dynamic range of the input data can produce very large values of output data as indicated by the dashed line in Figure 5.

For the purpose of the display the dynamic range of the output data is limited as indicated by the solid line characteristic in Figure 5.

In the embodiment of the invention shown in the drawings the relationship is implemented using a microprocessor and the practical limitation on the dynamic range of the output data is the maximum value which can be handled by the processor.

It is, of course, necessary to limit the dynamic range to that of the display as indicated by the solid-line characteristic in Figure 5. That, however, is done in the illustrative embodiment only after the window levelling relationship has been applied to the input data, and the window levelled data has been interpolated (if interpolation is applied to it).

As shown in figure 2, and as just mentioned, the image processor 27 of the illustrative embodiment of the system comprises a microprocessor 272 which is for example an Intel i860 (Trade Mark) microprocessor, the structure and operation of which is described in the:

"i860 64-Bit Microprocessor Programmer's Reference Manual 1990"

and in other literature giving for instance details of the i860 hardware, available from Intel Corporation Literature Sales, PO Box 7641, Mt. Prospect, IL 60056-7641, U.S.A.

Whilst such a microprocessor is designed to process image data quickly, it is not inherently fast enough itself to scale, offset, clip and, if required, interpolate image data of a nuclear camera and other medical diagnostic imaging systems e.g. Magnetic Resonance, or Computed Tomography sufficiently quickly. The illustrative embodiment of the present invention overcomes that problem.

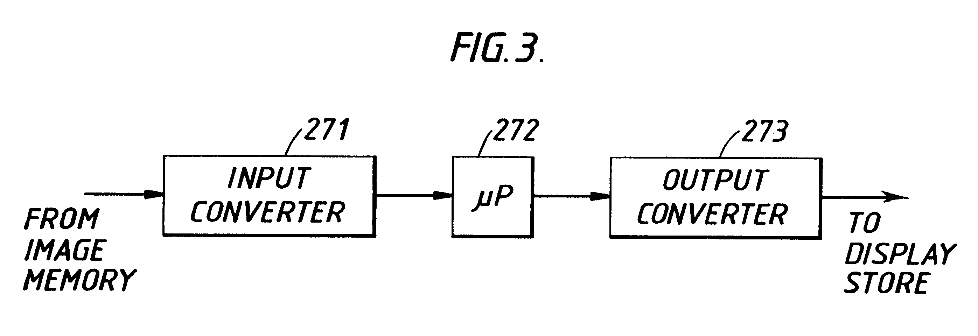

As shown in Figure 3 the 8 bit or 16 bit integer data from the image memory 25 is converted to 32 bit floating point data in an input convertor 271 before being fed to the microprocessor 272.

The input converter may comprise simply a Read Only Memory (ROM) (not shown) containing a look-up table of 32 bit floating point data which is addressed by the 8 bit or 16 bit integer data. Alternatives will be apparent to those skilled in the art. For example, conversion may be carried out by the microprocessor 272 although such conversion would reduce the throughput of the microprocessor.

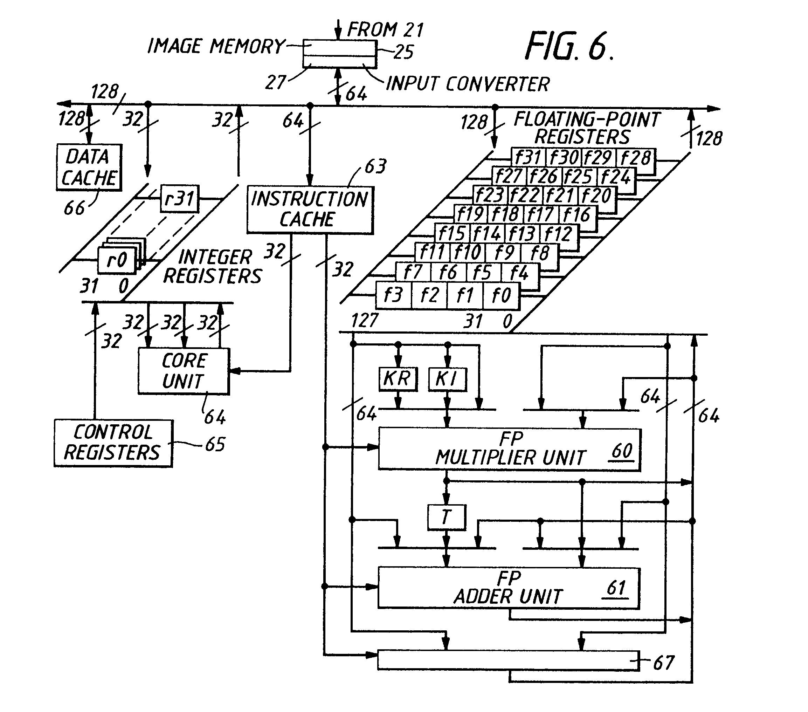

The microprocessor performs the scaling and offsetting on the 32 bit floating point data in a manner to be described with reference to Figures 5, 6, 7 and 8 and Appendix 1.

Following scaling and offsetting, the data may be subject to interpolation in the microprocessor. It is known to interpolate by fixed interpolation factors e.g. x2, x4 and x8 and such interpolation is within the knowledge of those skilled in the art.

The scaled, offset, and possibly interpolated, data is then fed to an output converter 273 which converts the 32 bit floating point data to 8 bit integer data assembled into 64 bit words, and, also, clips or limits the data to conform to the dynamic range of the display store. The 64 bit words are stored in the display store 274 for display.

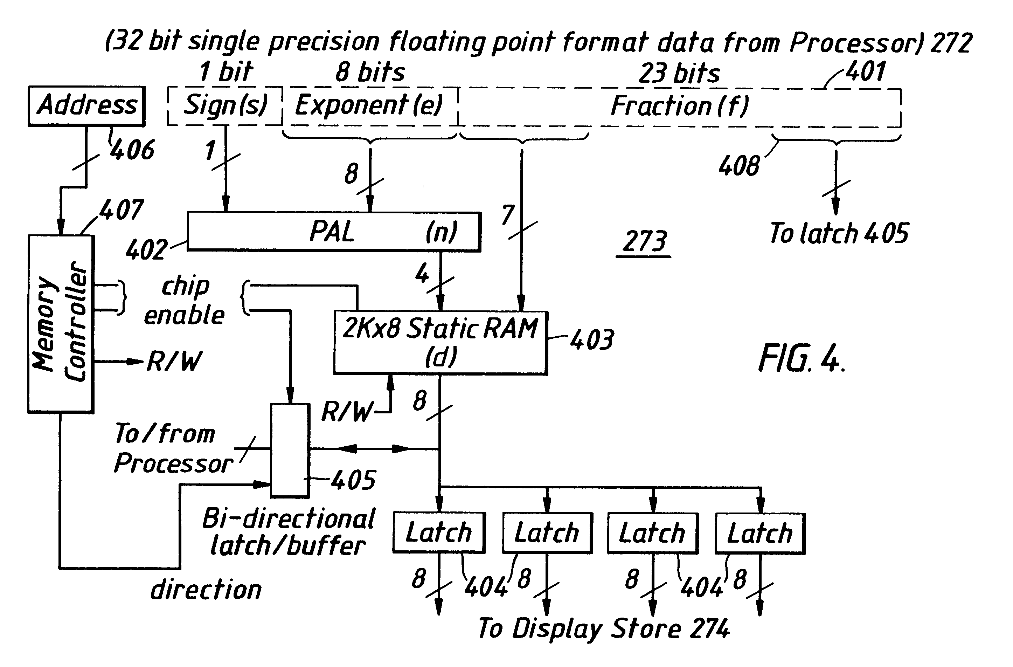

The output converter will be described in more detail with reference to Figures 4 and 5.

As discussed above, the relationship between input and output values may be written as

Output = Input x scale - offset

for values of offset and scale derived from upper and lower input values chosen by the operator using the operator interface 41.

i860 STRUCTURE

The i860 microprocessor has a core (or integer) unit 64 and a floating point unit.

The core unit 64 is associated with control registers 65, integer registers $r_o$ to $r_{31}$ a data cache 66 and an instruction cache 63.

The instruction cache 63 receives code from an external memory and once loaded with the code allows the code to be executed at the rate of one instruction per clock or two instructions per clock when operating in dual mode (as described hereinafter). When the code is executed for the first time it is executed slowly from the external memory and is loaded at the same time into the instruction cache.

Data can be loaded into the data cache 66 from external memory and also from e.g. the floating point unit. In order to load data into the cache 66 from the floating point unit, the data cache must initially contain data defining the addresses within it at which the floating point data is to be stored. When floating point data is produced together with appropriate addresses, the data cache "recognises" and "grabs" the data.

The floating point unit contains amongst other things 32 32-bit floating point registers fo to f31, a floating point multiplier unit 60, a floating point adder unit 61, and three special registers KR, KI and T of which only KR is relevant to the present embodiment of the invention. The adder unit 61 performs floating point addition, subtraction and other operations and the multiplier unit 60 performs floating point multiply and other operations. When the floating point unit is arranged to operate on 32 bit floating part data (single precision mode) the adder and multiplier units 60, 61 each act as a 3 stage pipeline. (There is also a graphics processing unit 67 which is not of relevance to the present embodiment of the invention.)

The data paths connecting the floating point registers, the special registers and the multiplier and adder units are configurable according to instructions held in the instruction cache 63.

The microprocessor can operate in a "dual mode" and can execute "dual operations".

In "dual mode" the core unit and the floating point unit both execute one instruction per clock in parallel.

In "dual operation" both the floating point multiplier and the floating point adder generate one output per clock in parallel.

The present embodiment of the invention makes use of the i860 architecture to maximise throughput by:

operating on 32 bit floating point data;

using pipelined floating point add and multiply operations in parallel (dual operation); and

executing both core instructions and floating point instructions in parallel (dual mode).

The relationship

$$\text{Output} = \text{Input x scale - offset}$$

which involves a multiply operation and a subtraction is implemented in such a way as to give one output value (result) for approximately each clock cycle, as described in the following with reference to Appendix 1. Appendix 1 shows on the left hand side headed 'PSEUDO CODE' the flow of data through the processor. Appendix 1 shows on the right hand side 'i860 Code' Mnemonics of the instructions carried out by the processor.

There are five basic operations:

1) Initialise values in various registers

2) Load image data,

3) Multiply image data by the scale factor

4) Add the constant or offset to the result of the multiplication and

5) Store the result of the addition.

When operating on 32 bit floating point single precision data, the floating point unit has three pipelines, each with three stages:-

1) A load/pipeline

2) A multiplier pipeline and

3) An adder pipeline

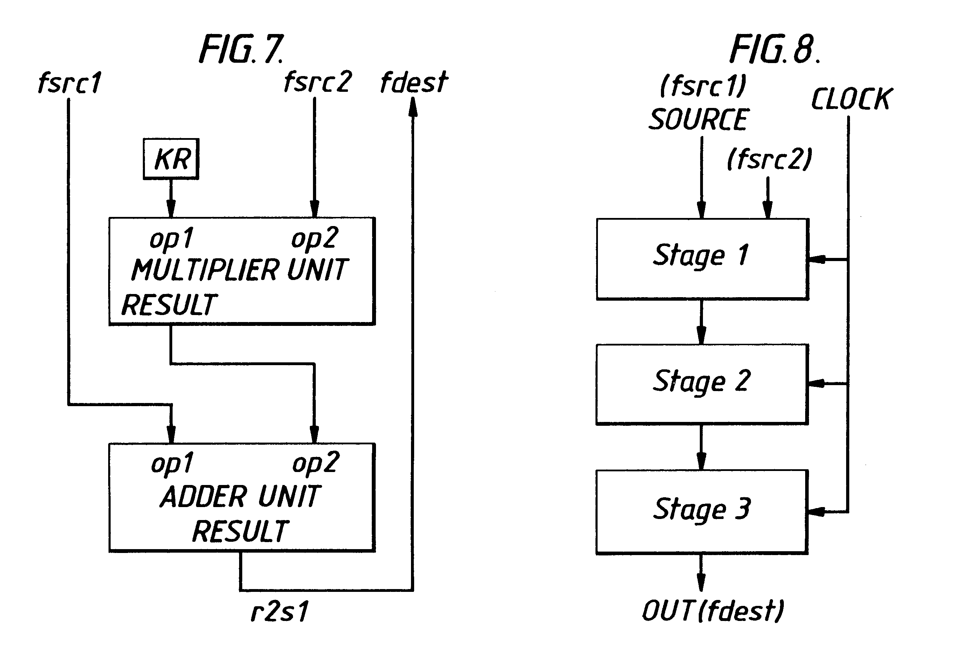

The stages of a pipeline are clocked each time the relevant instruction is executed. Referring to Figure 8, the first stage is connected to a source and the third stage produces an output. On a first clock the source appears at the output of the first stage, on a second clock it appears at the output of the second stage and on the third clock appears at the output of the pipeline.

FLOATING POINT INSTRUCTIONS

The instruction which implements the relationship

$$\text{Output} = (\text{Input x scale}) - \text{offset}$$

has the mnemonic form

r2s1.ss, fsrcl, fsrc2, fdest.

The mnemonic r2s1 configures the multiplier unit, adder unit and special register KR as shown in Figure 7.

Register KR stores the scale factor.

fsrcl, fsrc2, are floating point source registers and fdest is a floating point destination register.

The term .ss indicates that the source registers and the destination registers store 32 bit floating point numbers (known as single precision numbers).

The term r2s1 is preceded by d. which indicates that "dual mode" operation takes place: i.e. core instructions are executed in parallel with floating point instructions.

CORE INSTRUCTIONS

The core instructions which are performed are mainly load and store instructions.

LOAD INSTRUCTIONS

The load instructions have the form

pfld.d 8(r2)++,fn where n is a number 0 to 31

The term pfld indicates a pipelined (p) floating point (f) load (ld).

The term .d indicates a 64 bit word is to be loaded: i.e. 2 32-bit image data.

(r2) indicates the register containing the address in the image memory 25 of the data to be loaded: in this case integer register r2.

++ indicates that the address in r2 is to be incremented after the address has been used.

8 indicates that the address increment is 8 bytes (64 bits).

fn indicates the pair of floating point registers to which the data is to be loaded, the registers being fn and fn+1 e.g. f2 and f3.

STORE INSTRUCTIONS

The store instructions have the form e.g.

fst.d fn, 8(r3)++

where fst indicates a floating point store operation

.d indicates a 64 bit word (2 32-bit values) is to be stored

fn indicates the pair of floating point registers containing the word to be stored (n = 0 to 31)

e.g. f6 indicates registers f6 and f7

8(r3) ++ indicates that the integer register (e.g. r3) containing the address where the 64 bit word is to be stored is to be incremented by 8 bytes after use.

OTHER CORE INSTRUCTIONS

fnop indicates no floating point operation: the contents of all floating point pipelines remain unchanged.

nop indicates no core operation. The load pipeline is moved along only by a load operation.

.d indicates dual mode

bla r5, r4, Inst 14 indicates a branching operation, in this case return to instruction 14.

As explained in the i860 Programmer's Manual, the register r5 contains a preset number e.g. -1, and a loop length number in R4 is changed on each branching until it contains a number which has a preset relationship to r5. When that happens the status of a flag LCC contained in one of the control registers 65 is changed to end branching.

It should be noted that the instruction after the branch instruction is carried out before branching actually takes place.

SCALING AND OFFSETTING

Assume that:

the image data (input values) produced by the camera 13 and the data acquisition module 21 is represented in 16 bit 2's complement format. Such data has a dynamic range of ($-2^{15}$) to ($+2^{15}-1$) or decimal - 32768 to + 32767;

the display store 274, and thus the display 28, has a dynamic range of decimal 0 to 239; and

that information of interest to be displayed is information having image data values only in a chosen window or range above a base or lower value.

This situation is shown graphically in Figure 5, for an illustrative linear relationship between input and output values.

Assume also that:

the 32 bit floating point image data is loaded into consecutive addresses of zero wait state external memory 25, the addresses being contained in integer register r2;

the scale factor is loaded into special register KR;

the constant offset is loaded into floating point register f20, and

the load pipe is preloaded with input data (D0,D1), (D2,D3) and (D4,D5).

Referring to Appendix 1 and to Figure 8 in Instruction 1, input data D0, D1 is loaded from the output of the load pipeline into registers f22 and f23. Simultaneously D6,D7 are loaded into the first stage of the load pipeline from external memory addressed by means of the register r2 which is then incremented by eight bytes.

At instruction 5, data D0 is multiplied by the scale factor held in the special register KR and the multiple (D0. Scale) appears at the output of the first stage of the multiply pipeline.

The multiply pipeline has 3 stages, so (D0. Scale) appears at the output of the third stage after the execution of instruction 7 and enters the adder pipeline where, at instruction 8, the offset held in register f20 is added. The adder pipeline is 3 stages long, so (D0. Scale - offset) appears at the output of the third stage after the execution of instruction 10 to be stored as 00 in floating point register f6 at instruction 11. (D1. scale - offset) follows one instruction later (12) to be stored as 01 in register f7.

With both 00 and 01 stored in registers f6 and f7, at the next instruction (14) at which it is possible 00 and 01 are written into the data cache 66 at addresses specified in register r3 which addresses are then incremented by 8 bytes.

Once the pipelines are full, the sequence of load, multiply, add and store as described above is followed for successive pairs of input data (D2,D3) .. (D20,D21) .. (Dm,Dm+1), at instructions 13 to 20. Instruction 21 is the branch instruction discussed above which creates a loop from instruction 20 to instruction 14. Instruction 22 is a duplicate of instruction 13 because the branch instruction is not implemented until the instruction following the branch instruction is executed.

In instructions 5 to 10 it will be noted that the destination register fdest is f0. In instruction 5 to 7 it will be noted that the source register fsrcl is also fo. fo is a register which always returns zero when read, independently of whatever is stored in it. It will be recalled that the multiplier and adder pipelines have a total of 3+3=6 stages. Initially these stages do not contain meaningful data so for the first 6 cycles of activity output from the last stage of the adder pipeline is discarded, thus fdest is fo for instructions 5 to 10. During instructions 5 to 7 there is no data in the adder pipeline to which the offset may be added; thus fsrc1 is fo during these instructions.

## INITIALIZATION

The description above of the scaling and offsetting assumes that register

$r_2$ contains the input pointer address in the external memory 25 of the input data Dm

$r_3$ contains the output pointer address for the output data in the data cache 66

$r_4$ contains loop length

$r_5$ contains a decrement value of -1

f20 contains the offset value

and

KR contains the scaling factor.

Referring to Appendix 2, the CPU 40, during initialization, loads the external memory 25 with the data at the addresses shown where HIGH16/LOW16 is a start address and +4, +8, +12, +16, +20 are increments of the start address.

The data is loaded from the external memory into the registers as set out in Appendix 2.

The instructions orh and ld.l assemble a 32 bit address in register r30, which address points to HIGH16/LOW16 in the external memory.

The following ld.l instructions load the data into various registers as noted in Appendix 2. The scale factor is loaded into register f21, even though it is destined for special register KR. To load the scale factor into KR the instruction r2pt.ss is used which configures the multiplier so that KR is connected to the source fsrcl which is defined in the instruction as f21. The instruction defines both fsrc2 and fdest as fo to reflect the fact that the multiplier is not operating on meaningful data while KR is being loaded.

THE OUPUT CONVERTER

The image processor 27 operates on, and produces, 32 bit floating point data which as described above is stored in data cache 66 at addresses held in register r3. Such data has the format:-
sign S (1 bit), exponent e (8 bits), mantissa f (23 bits)

The mantissa may also be referred to as a fraction.

The value of the data is

$-1^s \times 1.f \times 2^{e-127}$ for $0<e<255$

If e = 0 and f = 0 then the value is signed zero.

It should be noted that the value of the mantissa is 1.f; where . is a binary point. The 1 term is implied, only the f term being represented.

It is assumed here that the display has a dynamic range of (decimal) 0 to 239. As shown in Figure 5, the floating point values produced by the window levelling can have values over a much greater range than the original data e.g. -32K to +32K times the scaling factor which may be large. The only limitation on the dynamic range is the maximum value which can be represented by a 32 bit floating point number. Interpolation of the window levelled data, if performed, may in some circumstances further increase the dynamic range.

Figure 5 is an example of a simple linear transfer function, with limiting, which may be implemented by the output converter. Figure 5 is presented for simplicity of explanation. Other transfer fractions, including non-linear ones, may be used.

Referring to Figure 4, the output converter 273 receives from the data cache 66 32 bit floating point data on 32 parallel lines in the format shown at 401. The data may be subject to interpolation between being output from the cache 66 and reception by the converter 273.

The data will be limited by the converter to a dynamic range of 0 to 239. Thus only 8 bit resolution is required. Therefore, the 7 MSB's of the fraction or mantissa f are inspected. 7 bits are inspected because of the implied '1' (the eighth bit) in the value of the mantissa.

The sign bit (s) and the 8 exponent bits (e) are inspected by a logic circuit 402, in this example, a PAL Programmable Array Logic) circuit. The PAL 402 produces a 4 bit number n in response to the bits s and e, according to the following conditions:

```
If     ((s=1)
  or   ((s=0) and (e=0))
  or   (e<127))               THEN  n=8         indicating negative
                                                numbers, +0 and
                                                positive fractions
If (e>134)                    THEN  n=9         indicating positive
                                                numbers greater than
                                                255

                              ELSE  n=(e-127)   indicating positive
                                                numbers in the range
                                                1 to 255 (n=0...7)
```

Those skilled in the art know how to implement these conditions in a PAL and so there is no need to give details of the contents of the PAL.

The number n and the 7 bits of the mantissa f address a 2KX8 static RAM 403 which, in response, outputs a limited 8 bit output value d, according to the following conditions:-

```
If (n=8)        THEN    d=0
If (n=9)        THEN    d=239
If (n=0 to 6)   THEN    d=1.fx2^n where the input value f is
                                  truncated to 7 bits.
If (n=7)        THEN  If (f<1110000 binary) THEN d=1.fx2^7
                                            ELSE d=239
```

Examples of clipping for various input values are:

Clip low

```
Input value    = -8
               = 1(s), 130(e), 0(f)        (floating point)
             n = 8
             d = 0

Input value    = 0
               = 0(s), 0(e), 0000000(f)    (floating point)
             n = 8
             d = 0

Input value    = 0.5
               = 0(s), 126(e), 0000000(f)  (floating point)
             n = 8
             d = 0
```

Input in range

```
Input value    = 167
               = 0(s), 134(e), 0100111(f)  (floating point)
             n = 7
             d = 1.0100111x2^7
               = 10100111
               = 167
```

Clip high

```
Input value     = 250
                = 0(s), 134(e), 1111010(f) (floating point)
              n = 7, but f is >1110000, so
              d = 239

Input value     = 8192
                = 0(s), 140(e), 0000000(f) (floating point)
              n = 9
              d = 239
```

8 bit output values d from the RAM 403 are supplied to latches 404 from which 4 values are supplied as a 32 bit word to the display store 274.

The RAM 403 may be replaced by a ROM containing a fixed transfer function. However, in the output converter 273 shown, the transfer function is written into the RAM by the image processor 272. The transfer function is written into the RAM during power-up initialization and whenever the operator adjusts the window level controls. The RAM may not be updated while a single image is being processed, but only between images.

To enable updating to take place a bidirectional latch 405 is provided having chip enable and direction inputs driven by a memory controller 407 and the RAM 403 has a chip enable input and a read/write input (R/W) also driven by the memory controller 407.

The processor generates 32 bit numbers which are fed to the PAL 402 and RAM 403 to produce combinations of n, f and d. The value of d is represented by the 8 least significant bits of the 32 bit number. Each 32 bit number is generated in association with another preset number which is produced on the address bus 406 of the microprocessor. The preset number on the address bus actuates the memory controller 407 to produce the chip enable, read/write and direction signals. For each combination of n and f which forms a RAM address a corresponding value of d is written into the RAM 403 via the latch 405.

The processor may also read the values of d via the latch 405 and the memory controller 407 to verify the contents of the RAM 403.

Any transfer function may be programmed into the RAM instead of the conventional linear function shown in Figure 5.

The processor 272 is a 64 bit processor. It can therefore output two 32 bit floating point data in a single 64 bit word. Thus two output converters as shown in Figure 4 may be provided in parallel. The two converters may then send a single 64 bit word comprising 8 8 bit values d to the display store 274. The two RAMs 403 of the two converters are simultaneously updated in the manner described above.

| instruction number | PSEUDO-CODE | | | | Mnemonic i860 CODE | |
|---|---|---|---|---|---|---|
| | CORE OR INTEGER | MULTIPLIER | ADDER | (Adder O/P) | | |
| 1 | Load D0,D1 | | | | d.fnop<br>pfld.d | <br>8(r2)++,f22 |
| 2 | | | | | d.fnop<br>nop | |
| 3 | Load D2,D3 | | | | d.fnop<br>pfld.d | <br>8(r2)++,f24 |
| 4 | | | | | d.fnop<br>nop | |
| 5 | Load D4,D5 | D0*Scale | | | d.r2s1.ss<br>pfld.d | f0,f22,f0<br>8(r2)++,f26 |
| 6 | | D1*Scale | | | d.r2s1.ss<br>nop | f0,f23,f0 |
| 7 | Load D6,D7 | D2*Scale | | | d.r2s1.ss<br>pfld.d | f0,f24,f0<br>8(r2)++,f28 |
| 8 | | D3*Scale | – Constant | | d.r2s1.ss<br>nop | f20,f25,f0 |
| 9 | Load D8,D9 | D4*Scale | – Constant | | d.r2s1.ss<br>pfld.d | f20,f26,f0<br>8(r2)++,f22 |
| 10 | | D5*Scale | – Constant | | d.r2s1.ss<br>nop | f20,f27,f0 |
| 11 | Load D10,D11 | D6*Scale | – Constant | O0 | d.r2s1.ss<br>pfld.d | f20,f28,f6<br>8(r2)++,f24 |
| 12 | | D7*Scale | – Constant | O1 | d.r2s1.ss<br>nop | f20,f29,f7 |
| 13 | Load D12,D13 | D8*Scale | – Constant | O2 | d.r2s1.ss<br>pfld.d | f20,f22,f8<br>8(r2)++,f26 |
| 14 | Store O0,O1 | D9*Scale | – Constant | O3 | d.r2s1.ss<br>fst.d | f20,f23,f9<br>f6,8(r3)++ |
| 15 | Load D14,D15 | D10*Scale | – Constant | O4 | d.r2s1.ss<br>pfld.d | f20,f24,f10<br>8(r2)++,f28 |
| 16 | Store O2,O3 | D11*Scale | – Constant | O5 | d.r2s1.ss<br>fst.d | f20,f25,f11<br>f8,8(r3)++ |
| 17 | Load D16,D17 | D12*Scale | – Constant | O6 | d.r2s1.ss<br>pfld.d | f20,f26,f12<br>8(r2)++,f22 |
| 18 | Store O4,O5 | D13*Scale | – Constant | O7 | d.r2s1.ss<br>fst.d | f20,f27,f13<br>f6,8(r3)++ |
| 19 | Load D18,D19 | D14*Scale | – Constant | O8 | d.r2s1.ss<br>pfld.d | f20,f28,f6<br>8(r2)++,f24 |
| 20 | Store O6,O7 | D15*Scale | – Constant | O9 | d.r2s1.ss<br>fst.d | f20,f29,f7<br>f8,8(r3)++ |
| 21 | Branch to 14 | | | | d.fnop<br>bla | <br>r5,r4,Instr 14 |
| 22 | Load D20,D21 | D16*Scale | – Constant | O10 | d.r2s1.ss<br>pfld.d | f20,f22,f8<br>8(r2)++,f26 |

Appendix 1

EXTERNAL MEMORY

| Data | Address |
|---|---|
| Offset | HIGH16 / LOW16 |
| Scale | + 4 |
| Input pointer | + 8 |
| Output pointer | + 12 |
| Loop length | + 16 |
| −1 | + 20 |

```
orh     HIGH16a, r0, r31        // Load 16 bit constant (HIGH16) into upper 16 bits of R31
ld.l    LOW16(r31), r30         // Add 16 bit constant (LOW16) to lower 16 bits of R31

ld.l    0(r30), f20             // Load Offset to floating point register f20
ld.l    4(r30), f21             // Load Scale to f21
ld.l    8(r30), r2              // Load Input pointer to r2
ld.l    12(r30), r3             // Load Output pointer to r3
ld.l    16(r30), r4             // Load Loop Length to r4
ld.l    20(r30), r5             // Load -1 to r5 (to decrement loop count)

    r2pt.ss  f21, f0, f0        // load the KR register with the value previously placed in f21.
```

Appendix 2

## Claims

1. An image processing apparatus comprising
processing means arranged to perform a plurality of pipelined arithmetic operations in parallel on image data represented in floating point format and
converting means arranged to receive the processed floating point data from the processing means and to convert the processed floating point data to a form suitable for use by an image data utilization means.

2. Apparatus according to claim 1 or 2, wherein the processing means performs core instructions associated with the said plurality of floating point arithmetic operations in parallel therewith.

3. Apparatus according to claim 1 or 2 wherein the said plurality of floating point arithmetic operations scale and offset the floating point image data.

4. Apparatus according to claim 3, wherein the processing means performs interpolation on the scaled and offset floating point image data.

5. Apparatus according to any preceding claim wherein the converting means converts the floating point data to integer format.

6. Apparatus according to any preceding claim wherein the converting means applies a transfer function to the image data.

7. Apparatus according to claim 6 wherein the transfer function is a linear function.

8. Apparatus according to claim 7 where the transfer function is a non-linear function.

9. Apparatus according to any preceding claim wherein the converting means limits the dynamic range of the converted image data.

10. Apparatus according to any preceding claim, wherein the converting means comprises storage means for storing data of the form suitable for use by the utilization means, and means responsive to the floating point image data from the processing means for addressing the stored data.

11. Apparatus according to claim 10, wherein the addressing means applies to the storage means as an address, at least the most significant ones of the fraction bits of, and a logical combination of the sign and exponent bits of, the floating point data.

12. Apparatus according to claim 10 or 11, wherein the converting means comprises means, responsive to the processing means, for writing data of the said form into the storage means.

13. Apparatus according to any preceding claim further comprising an input converter for receiving image data represented in integer format and arranged to convert the integer format image data to floating point format to be processed by the processing means.

14. Apparatus according to claim 13, comprising means for sensing scintillation events, and image data acquisition means for producing, from the sensed events digital image data in integer format.

15. Apparatus according to any preceding claim which is a medical diagnostic imaging apparatus.

16. Image Processing Apparatus substantially as hereinbefore described with reference to Appendices 1 and 2 and to Figures 3 to 8 optionally together with Figures 1 and 2.

X,Y COORDINATE CALCULATOR
10
11
12
13
14
15
16
17
18
19

FIG.1.

DISPLAY
28
DISPLAY STORE
274
PROCESSOR FIG.3.
27
IMAGE MEMORY
25
CPU
40
OPERATOR INTERFACE
41
DIGITAL PROCESSING
21
22
DISK CONTROLLER
DISK(S)
30
ANALOG PROCESSING
20
19
X-Y CO-ORD. CALC.
12
CAMERA
13

FIG.2.

FROM IMAGE MEMORY
271
INPUT CONVERTER
272
μP
273
OUTPUT CONVERTER
TO DISPLAY STORE

FIG. 3.

(32 bit single precision floating point format data from Processor) 272
1 bit
8 bits
23 bits
401
Address
Sign (s)
Exponent (e)
Fraction (f)
406
1
8
408
7
To latch 405
407
PAL
(n)
402
273
4
Memory Controller
chip enable
2Kx8 Static RAM
(d)
403
R/W
R/W
8
To/from Processor
405
Bi-directional latch/buffer
Latch
Latch
Latch
Latch
direction
8
404
8
8
404
8
To Display Store 274

FIG. 4.

FIG. 5.
239
Output Values
0
Window
Upper Value
Lower Value
Input Values
+32K
-32K

FIG. 6.
IMAGE MEMORY
FROM 21
25
27
INPUT CONVERTER
FLOATING-POINT REGISTERS
f31 f30 f29 f28
f27 f26 f25 f24
f23 f22 f21 f20
f19 f18 f17 f16
f15 f14 f13 f12
f11 f10 f9 f8
f7 f6 f5 f4
f3 f2 f1 f0
127
31
0
INSTRUCTION CACHE
63
INTEGER REGISTERS
r31
r0
CORE UNIT
64
CONTROL REGISTERS
65
DATA CACHE
66
KR
KI
T
FP MULTIPLIER UNIT
60
FP ADDER UNIT
61
67
128
64
32

CLOCK
(fsrc1)
SOURCE
(fsrc2)
Stage 1
Stage 2
Stage 3
OUT(fdest)

FIG.8.

fsrc1
KR
op1
MULTIPLIER UNIT
RESULT
op2
fsrc2
fdest
op1
ADDER UNIT
RESULT
op2
r2s1

FIG.7.